# EUROPÄISCHE PATENTSCHRIFT

(11) **EP 2 073 497 B1**
(45) Veröffentlichungstag und Bekanntmachung des Hinweises auf die Patenterteilung: **06.08.2014**
(21) Anmeldenummer: 08018280.1
(22) Anmeldetag: 18.10.2008
(51) Int. Cl.: H04L 29/08

(54) **Verfahren zum Auffinden eines Kommunikationspartners in einer mobilen Netzwerkumgebung**
Method for locating a communication partner in a mobile network environment
Procédé destiné à trouver un partenaire de communication dans un environnement de réseau mobile

(30) Priorität: 19.12.2007 DE 102007061694
(43) Veröffentlichungstag der Anmeldung: 24.06.2009
(73) Patentinhaber: Deutsche Telekom AG, 53113 Bonn (DE)
(72) Erfinder: Biehl, Moritz, 01097 Dresden (DE)
(74) Vertreter: Kampfenkel, Klaus

(56) Entgegenhaltungen:
- WO-A-03/058908
- GB-A- 2 389 742

## Beschreibung

Die Erfindung betrifft ein Verfahren zum Auffinden eines Kommunikationspartners in einer mobilen Netzwerkumgebung sowie ein Kommunikationsendgerät, welches insbesondere zur Durchführung des Verfahrens gebildet ist.

Bekannt sind Kommunikationsprotokolle, die insbesondere auf dem Bluetooth-Standard basieren, welche eine drahtlose Vernetzung von Geräten über kurze Distanzen ermöglichen. Innerhalb einer Kurzstreckenfunkzone, auch Nahbereichszone oder Wireless Personal Area Network (WPAN) genannt, können Kommunikationsgeräte untereinander kommunizieren. Darüber hinaus gibt es sogenannte Adhoc-Netze, welche mobile Geräte ohne feste Infrastruktur miteinander verbinden.

Die Britische Patentanmeldung GB 2 389 742 A offenbart ein Kommunikationsgerät und ein Kommunikationsverfahren. Das Kommunikationsgerät umfasst einen Speicher, der ein Profil eines Nutzers des Gerätes speichert. Das Profil enthält Attribute und Anforderungen der Anwender. Ein Kommunikator ist dazu angepasst, Informationen mit einem kompatiblen Gerät auszutauschen. Ein Controller ist dazu vorgesehen, eine Übereinstimmung zwischen gesendeten Informationen und Informationen von einem kompatiblen Gerät zu erfassen. Die Übereinstimmung wird nur dann festgestellt, wenn die Attribute mit den Anforderungen übereinstimmen. Wenn eine

Übereinstimmung erfasst wird, wird der Anwender davon informiert.

Die Europäische Patentanmeldung EP 2 073 497 A1 betrifft ein Verfahren zur Identifizierung der anonymen Profile von Teilnehmern in einem Kommunikationssystem, wobei der Teilnehmer teilnehmerspezifische Profile über einen entsprechenden Eingang in einem Kommunikationsendgerät und / oder in einem entsprechenden Modul mit einem Kommunikationsgerät (E) speichert.

Die Kommunikationsendgeräte werden dazu verwendet, die Profile der anderen Teilnehmer des Kommunikationssystems auf der Basis einer drahtlosen, lokal definierten Netzwerk-Technologie zu sammeln. Sind die Profile definiert und gespeichert, dann werden sie aufgrund einer teilnehmerspezifischen Korrelationsschwelle verworfen. Das Modul umfasst eine Speichereinheit für die Speicherung von Profilen, eine Kollektoreinheit, die auf der Basis einer drahtlosen, lokal definierten Netzwerktechnologie für die Erfassung von Profilen von Teilnehmern in einem Kommunikationssystem zuständig ist, eine Korrelationseinheit für den Vergleich von Profilen, und eine Signalisierungs-/Synchronisierungseinheit.

Ein Kerngedanke der Erfindung ist darin zu sehen, dass jeder Nutzer auf seinem mobilen Endgerät sein eigenes Nutzerprofil eingibt. Das Nutzerprofil enthält beispielsweise Angaben darüber, was der jeweilige Nutzer anzubieten hat oder nach welcher Art von Information er Ausschau hält. Die Information kann Angaben über bestimmte Gesprächsthemen, Geschäftspartner, Produkte, Expertensystem, Hobbys und vieles mehr enthalten. Die mobilen Endgeräte bauen dann ein Kurzstreckenfunknetz auf, über das sie untereinander ihre Nutzerprofile austauschen. Die Nutzerprofile können dann dezentral, d. h. in jedem mobilen Endgerät verglichen werden, um jeweils geeignete Kommunikationspartner zu finden.

Das oben genannte technische Problem wird zum einen durch ein Verfahren zum Auffinden eines Kommunikationspartner in einer mobilen Netzwerkumgebung gelöst.

Bereits an dieser Stelle sei darauf hingewiesen, dass unter einer mobilen Netzwerkumgebung nicht nur ein einziges Kurzstreckenfunknetz mit mobilen Endgeräten, sondern auch eine hybride Netzstruktur zu verstehen ist, die Funknetze unterschiedlichen Standards umfassen kann. Auch ortsfeste Kommunikationsendgeräte, wie zum Beispiel PCs, Terminals und dergleichen können Bestandteil einer solchen mobilen Netzwerkumgebung sein.

Zunächst wird in mehreren ersten mobilen Endgeräten ein Nutzerprofil hinterlegt, welches vom Nutzer des jeweiligen mobilen Endgerätes definiert werden kann. Die ersten mobilen Endgeräte, die sich innerhalb einer Kurzstreckenfunkzone befinden und ein erstes Kurzstreckenfunknetz bilden, tauschen untereinander die auf ihnen hinterlegten Nutzerprofile aus. In jedem erstem mobilen Endgerät des ersten Kurzstreckenfunknetzes werden die Nutzerprofile der jeweils anderen ersten mobilen Endgeräte des ersten Kurzstreckenfunknetzes zwischengespeichert.
Angemerkt sei an dieser Stelle, dass mit dem Ausdruck "Hinterlegen eines Nutzerprofils in einem mobilen Endgerät" das Speichern des Nutzerprofils gemeint ist, welches dem Nutzer dieses mobilen Endgeräts zugewiesen ist. Mit dem Ausdruck "Zwischenspeichern eines Nutzerprofils in einem mobilen Endgerät" ist das Speichern des Nutzerprofils gemeint, welches dem Nutzer eines anderen mobilen Endgeräts zugewiesen ist.

In wenigstens einem ersten mobilen Endgerät des ersten Kurzstreckenfunknetzes wird das darin hinterlegte Nutzerprofil, also das Nutzerprofil des Nutzers des mobilen Endgeräts, mit dem oder den zwischengespeicherten Nutzerprofilen, also den Nutzerprofilen der Nutzer der anderen ersten mobilen Endgeräte, verglichen. Wird festgestellt, dass zwischen dem hinterlegten Nutzerprofil und mindestens einem zwischengespeicherten Nutzerprofil zumindest eine teilweise Übereinstimmung besteht, wird eine Informationsmeldung dem wenigstens einen ersten mobilen Endgerät bereitgestellt, welches die Nutzerprofile verglichen hat. Zusätzlich oder alternativ kann eine Informationsmeldung auch dem wenigstens einen anderen ersten mobilen Endgerät bereitgestellt werden, in dem das wenigstens teilweise mit dem hinterlegten Nutzerprofil übereinstimmenden Nutzerprofil hinterlegt worden ist. Auf diese Weise finden sich mindestens zwei Kommunikationspartner, die aktuell über identische oder zumindest teilweise identische Interessen, Wünsche oder dergleichen verfügen.

Bei der Informationsmeldung kann es sich vorteilhafterweise um die Mobilfunknummer eines entsprechenden ersten mobilen Endgerätes handeln. Auf diese Weise kann ein Kommunikationspartner unverzüglich unter Verwendung der angegebenen Mobilfunknummer den Kommunikationspartner mit identischen oder ähnlichen Interessen anrufen und gegebenenfalls spontan einen persönlichen Kontakt vereinbaren; denn beide Teilnehmer befinden sich innerhalb einer gemeinsamen räumlichen Umgebung.

Um die begrenzte Reichweite des ersten Kurzstreckenfunknetzes, welches insbesondere ein Adhoc-Netzwerk gemäß dem Bluetooth-Standard sein kann, zu erweitern, wird eine Möglichkeit geschaffen, die Nutzerprofile der ersten mobilen Endgeräte des ersten Kurzstreckenfunknetzes in eine andere, vorzugsweise benachbarte Kurzstreckenfunkzone, das heißt in ein zweites Kurzstreckenfunknetz einzuschleppen. Dies ist insbesondere dann sinnvoll, wenn sich innerhalb des ersten Kurzstreckenfunknetzes keine geeigneten Kommunikationspartner aufhalten. Das zweite Kurzstreckenfunknetz wird durch mehrere zweite mobile Endgeräte gebildet, in denen jeweils ein Nutzerprofil hinterlegt und die Nutzerprofile der anderen zweiten mobilen Endgeräte zwischengespeichert sind. Bei dem zweiten Kurzstreckenfunknetz kann es sich ebenfalls um ein Adhoc-Netz gemäß dem Bluetooth-Standard handeln. Bewegt sich wenigstens ein erstes mobiles Endgerät des ersten Kurzstreckenfunknetzes in das zweite Kurzstreckenfunknetz hinein, so wird es als neuer Netzteilnehmer erkannt. Das in dem ersten mobilen Endgerät hinterlegte Nutzerprofil und/oder die darin zwischengespeicherten Nutzerprofile werden zu den zweiten mobilen Endgeräten übertragen. Zusätzlich oder alternativ kann auch das in wenigstens einem der zweiten mobilen Endgeräte hinterlegten Nutzerprofil und/oder die darin zwischengespeicherten Nutzerprofile der übrigen zweiten mobilen Endgeräte zu dem ersten mobilen Endgerät übertragen werden. Auf diese Weise tragen alle mobilen Endgeräte beim Wechsel eines Kurzstreckenfunknetzes die gesammelten Nutzerprofile sowie das Nutzerprofil ihres Nutzers in das andere Kurzstreckenfunknetze hinein. Auf diese Weise erhöht sich deutlich die Chance, einen geeigneten Kommunikationspartner zu finden.

Für den Fall, dass ein Nutzer wenigstens eines ersten mobilen Endgerätes innerhalb des ersten Kurzstreckenfunknetzes keinen Kommunikationspartner gefunden hat und nicht warten möchte, bis sein Nutzerprofil durch den Nutzer eines anderen ersten mobilen Endgerätes in ein anderes Kurzstreckenfunknetz eingeschleppt wird, besteht die Möglichkeit, dass an dem wenigstens einen ersten mobilen Endgerät des ersten Kurzstreckenfunknetzes der Aufbau einer Kommunikationsverbindung über ein separates Funknetz, insbesondere ein WLAN oder ein öffentliches Mobilfunknetz zu einem zweiten Kurzstreckenfunknetz eingeleitet wird. Auf diese Weise entsteht eine mobile hybride Netzwerkumgebung. Das heißt, Kurzstreckenfunknetze werden über ein Funknetz, welches einen anderen Kommunikationsstandard verwendet, verbunden, so dass ein virtuelles Kurzstreckenfunknetz gebildet werden kann. Dadurch wird die Erreichbarkeit mobiler Endgeräte erweitert.

Der Netzbetreiber bietet somit dem Kunden die Möglichkeit, entweder nur im unmittelbaren Nahbereich eines Kurzstreckenfunknetzes kostengünstig zu kommunizieren oder aber durch ein separates Funknetz weitere Kurzstreckenfunknetze, vorzugsweise in der mittelbaren Umgebung, mit dem eigenen Kurzstreckenfunknetz zu verbinden.

Das zweite Kurzstreckenfunknetz wird wiederum durch mehrere zweite mobilen Endgeräte gebildet, in denen jeweils das Nutzerprofil des Nutzers hinterlegt und die Nutzerprofile der anderen zweiten mobilen Endgeräte zwischengespeichert sind. Über die aufgebaute Kommunikationsverbindung wird das in dem ersten mobilen Endgerät hinterlegte Nutzerprofil und/oder die darin zwischengespeicherten Nutzerprofile zu wenigstens einem der zweiten mobilen Endgeräte übertragen. In vorteilhafter Weise verteilt das zweite mobile Endgerät die empfangenen Nutzerprofile an die übrigen zweiten mobilen Endgeräte in an sich bekannter Weise weiter.

Um einen optimalen Austausch der Nutzerprofile der ersten und zweiten mobilen Endgeräte zu ermöglichen, werden über die aufgebaute Kommunikationsverbindung in ähnlicher Weise auch das in einem zweiten mobilen Endgerät hinterlegte Nutzerprofil und/oder die darin zwischengespeicherten Nutzerprofile der anderen zweiten mobilen Endgeräte zum ersten mobilen Endgerät, welches die Kommunikationsverbindung aufgebaut hat, übertragen.

Um herauszufinden, ob es für den Nutzer des ersten mobilen Endgerätes einen geeigneten Kommunikationspartner im zweiten Kurzstreckenfunknetz gibt, wird in wenigstens einem zweiten mobilen Endgerät das hinterlegte Nutzerprofil mit den zwischengespeicherten Nutzerprofilen, welche die Nutzerprofile der ersten mobilen Endgeräte enthalten, verglichen. Stellt das wenigstens eine zweite mobile Endgerät fest, dass zwischen dem hinterlegten Nutzerprofil und mindestens einem zwischengespeicherten Nutzerprofil zumindest eine teilweise Übereinstimmung besteht, wird eine Informationsmeldung für das wenigstens eine zweite mobile Endgerät und/oder für das erste mobile Endgerät, in welchem das wenigstens teilweise übereinstimmende Nutzerprofil hinterlegt worden ist, bereitgestellt.

In vorteilhafter Weise sorgt die Informationsmeldung dafür, dass an einem mobilen Endgerät die Rufnummer des gefundenen Kommunikationspartners angezeigt wird. Hierzu werden in den jeweiligen mobilen Endgeräten neben den zwischengespeicherten Nutzerprofilen der anderen mobilen Endgeräte auch die dazu gehörenden Rufnummern oder Adressen der jeweiligen mobilen Endgeräte mit gespeichert.

Sofern die Nutzerprofile zwischen den mobilen Endgeräten der beiden Kurzstreckenfunknetze ausgetauscht worden sind, kann auch in dem wenigstens einen ersten mobilen Endgerät das hinterlegte Nutzerprofil mit den zwischengespeicherten Nutzerprofilen, welche auch die Nutzerprofile der zweiten mobilen Endgeräte enthalten, verglichen werden. Stellt das erste mobile Endgerät fest, dass zumindest eine teilweise Übereinstimmung zwischen dem hinterlegten Nutzerprofil und mindestens einem zwischengespeicherten Nutzerprofil besteht, so wird eine Informationsmeldung für das wenigstens eine erste mobile Endgerät und/oder für das zweite mobile Endgerät, in welchem das wenigstens teilweise übereinstimmende Nutzerprofil hinterlegt worden ist, bereitgestellt.

Die Erfindung ermöglicht somit eine dezentrale, lokationsbasierte Prüfung von Nutzerprofilen, wobei die Reichweite des Verfahrens zum Auffinden von geeigneten Kommunikationspartnern im Bedarfsfall auf weitere Kurzstreckenfunknetze erweitert werden kann.

Das Verfahren ermöglicht beispielsweise Besuchern einer Messe, schnell und kostengünstig geeignete Kommunikationspartner, auch in verschiedenen Messehallen zu finden, die sich dann spontan und schnell persönlich treffen können.

Selbstverständlich kann ein Nutzer eines mobilen Endgerätes sein Nutzerprofil jederzeit ändern. Geänderte Nutzerprofile werden dann an die übrigen mobilen Endgeräte innerhalb des gemeinsamen Kurzstreckenfunknetzes verteilt und gegebenenfalls mobilen Endgeräten eines anderen Kurzstreckenfunknetzes übergeben.

Das oben genannte technische Problem wird ebenfalls mit einem Verfahren zum Auffinden eines Kommunikationspartners in einer mobilen Netzwerkumgebung gelöst, welches folgende Schritte aufweist:

Hinterlegen eines Nutzerprofils in wenigstens einem mobilen Endgerät;
Übertragen des Nutzerprofils von dem mobilen Endgerät zu einer ortsfesten Einrichtung, in der wenigstens ein weiteres Nutzerprofil gespeichert ist, wenn sich das mobile Endgerät und die ortsfeste Einrichtung in einer gemeinsamen Kurzstreckenfunkzone befinden;
Vergleichen der Nutzerprofile; und
Bereitstellen bei zumindest teilweiser Übereinstimmung zwischen zwei Nutzerprofilen einer Informationsmeldung für wenigstens eines der mobilen Endgeräte, in denen das zumindest teilweise übereinstimmende Nutzerprofil hinterlegt ist.

Auf diese weise ist es möglich, dass beispielsweise ein Anbieter einer Messe auf einem Bluetooth-fähigen Rechner, der hier als ortsfeste Einrichtung bezeichnet wird, Profile der eigenen Mitarbeiter sowie vorbeilaufender Gäste anbieten kann. Auf diese Weise wird Gästen, die vor einem überfüllten Stand warten, die Möglichkeit eingeräumt, herauszufinden, ob es überhaupt interessante Gesprächspartner an diesem Stand und/oder in näherer Umgebung gibt.

Gemäß einer bevorzugten Ausführungsform werden die gespeicherten Nutzerprofile von der ortsfesten Einrichtung selbst verglichen. Sofern zumindest eine teilweise Übereinstimmung zwischen wenigstens zwei Nutzerprofilen festgestellt wird, wird eine Informationsmeldung von der ortsfesten Einrichtung zum mobilen Endgerät, in welchem das zumindest teilweise übereinstimmende Nutzerprofil hinterlegt ist, übertragen.

Vorteilhafterweise werden die in der ortsfesten Einrichtung gespeicherten Nutzerprofile zu dem mobilen Endgerät übertragen. Ein Vergleich der Nutzerprofile findet dann in dem mobilen Endgerät selbst statt. Stellt das mobile Endgerät fest, dass das hinterlegte Nutzerprofil mit wenigstens einem der von der ortsfesten Einrichtung empfangenen Nutzerprofile übereinstimmt, wird eine entsprechende Informationsmeldung bereitgestellt, die den Nutzer des mobilen Endgerätes auf geeignete Kommunikationspartner hinweist.

Der Schritt des Bereitstellens einer Informationsmeldung beinhaltet ferner den Schritt des Ausgebens der Informationsmeldung an einem entsprechenden mobilen Endgerät, wobei die Informationsmeldung die Rufnummer des oder der mobilen Endgeräte enthält, in denen das zumindest teilweise übereinstimmende Nutzerprofil hinterlegt ist.

Das oben genannte technische Problem wird ferner durch ein Kommunikationsendgerät gelöst, welches insbesondere zur Durchführung des Verfahrens ausgebildet ist. Hierzu weist das Kommunikationsendgerät, welches vorzugsweise ein mobiles Endgerät sein kann, einen ersten Speicher auf, in dem das Nutzerprofil des Nutzers hinterlegt ist. Ferner ist eine Kurzstrecken-Funkschnittstelle, beispielsweise eine Bluetooth-Funkschnittstelle, zum Empfangen eines in einem anderen Kommunikationsendgerät hinterlegten Nutzerprofils vorgesehen. Ein zweiter Speicher dient zum Zwischenspeichern wenigstens eines in einem anderen Kommunikationsendgerät hinterlegten und/oder darin zwischengespeicherten Nutzerprofils. Eine Vergleichseinrichtung dient zum Vergleichen des im ersten Speicher hinterlegten Nutzerprofils mit dem oder den im zweiten Speicher zwischengespeicherten Nutzerprofilen. Ferner ist eine Einrichtung vorgesehen, die eine Informationsmeldung bereitstellt, wenn das im ersten Speicher hinterlegte Nutzerprofil mit wenigstens einem im zweiten Speicher zwischengespeicherten Nutzerprofil zumindest teilweise übereinstimmt.

Vorteilhafterweise identifiziert die Informationsmeldung dasjenige Kommunikationsendgerät, in welchem das zumindest teilweise übereinstimmende Nutzerprofil hinterlegt ist.

Die Erfindung wird nachfolgend anhand mehrerer Ausführungsbeispiele in Verbindung mit den beiliegenden Zeichnungen näher erläutert. Es zeigen:
- Fig. 1: eine hybride mobile Netzumgebung, in der die Erfindung verwirklicht ist, und
- Fig. 2: eine mobile Netzumgebung mit einem ortsfesten Kommunikationsendgerät.

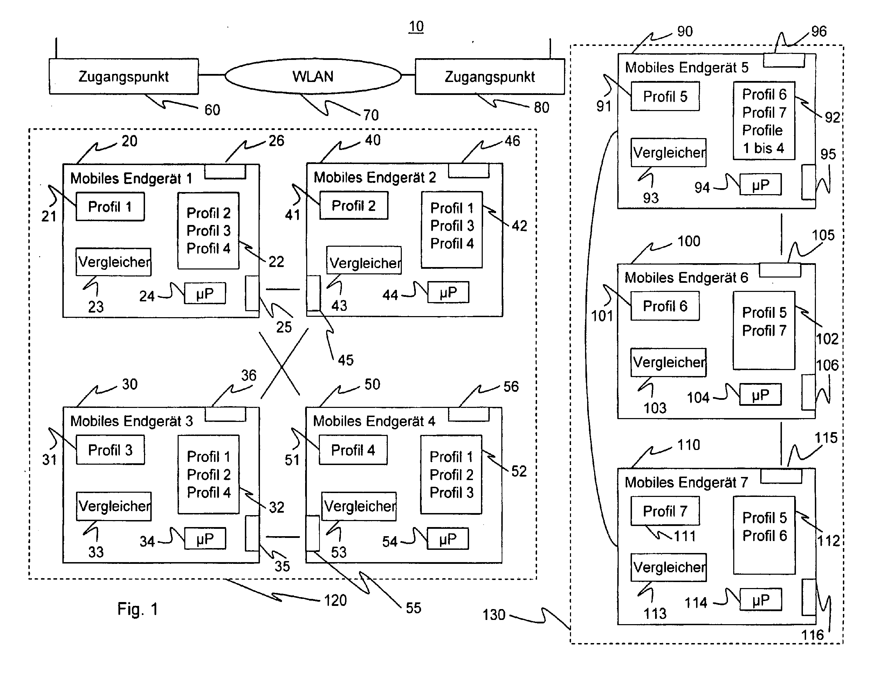

Fig. 1 zeigt beispielhaft eine mobile Netzwerkumgebung 10, welche eine hybride Netzstruktur aufweist. Innerhalb der mobilen Netzwerkumgebung 10 ist der Nutzer eines mobilen Endgerätes in der Lage, einen Kommunikationspartner zu finden oder zu identifizieren, mit dem er bestimmte Interessen gemeinsam hat. Die mobile Netzwerkumgebung 10 umfasst zunächst vier mobile Endgeräte 20, 30, 40 und 50, die beispielsweise ein Adhoc-Netz 120 gemäß dem Bluetooth-Standard bilden. Jedes mobile Endgerät enthält einen Speicher, in welchem ein vom Nutzer am mobilen Endgerät eingegebenes Nutzerprofil hinterlegt ist. Im Einzelnen ist das individuelle Nutzerprofil des Nutzers des mobilen Endgeräts 20 in einem Speicher 21 als Profil 1 hinterlegt. In ähnlicher Weise werden die Nutzerprofile der Nutzer der mobilen Endgeräte 30, 40 und 50 in einem Speicher 31, 41 beziehungsweise 51 als Profil 3, Profil 2 bzw. Profil 4 hinterlegt. Die mobilen Endgeräte 20, 30, 40 und 50 weisen Bluetooth-Funkschnittstellen 25, 35, 45 bzw. 55 auf, über die sie die hinterlegten Profile untereinander austauschen. Das bedeutet, dass die mobilen Endgeräte 20, 30 und 50 die hinterlegten Nutzerprofile 1, 3 und 4 zum mobilen Endgerät 40 übertragen. Die empfangenen Nutzerprofile 1, 3 und 4 werden dann in einem Speicher 42 zwischengespeichert. In ähnlicher Weise übertragen die mobilen Endgeräte 30, 40 und 50 ihre hinterlegten Nutzerprofile zum mobilen Endgerät 20. Nachdem auf diese Weise alle Nutzerprofile der mobilen Endgeräte 20, 30, 40 und 50 ausgetauscht worden sind, sind die Profile 2, 3 und 4 in einem Speicher 22 des mobilen Endgerätes zwischengespeichert, die Profile 1, 2 und 4 in einem Speicher 32 des mobilen Endgerätes 30 zwischengespeichert, und die Profile 1, 2 und 3 in einem Speicher 52 des mobilen Endgerätes 50 zwischengespeichert.

Jedes mobile Endgerät weist ferner eine Vergleichereinrichtung auf, die dazu dient, geeignete Gesprächspartner für den Nutzer des jeweiligen mobilen Endgeräts zu finden. Im Einzelnen weist das mobile Endgerät 20 eine Vergleichereinrichtung 23 auf, die das im Speicher 21 hinterlegte eigene Nutzerprofil 1 mit den im Speicher 22 zwischengespeicherten Nutzerprofilen 2, 3 und 4 vergleichen kann. Die Überwachung und Steuerung des mobilen Endgerätes 20 und deren Komponente übernimmt ein programmierbarer Mikroprozessor 24. In ähnlicher Weise weist das mobile Endgerät 30 eine Vergleichereinrichtung 33 auf, die das im Speicher 31 hinterlegte eigene Nutzerprofil mit den im Speicher 32 zwischengespeicherten Nutzerprofilen 1, 2 und 4 der übrigen mobilen Endgeräte vergleichen kann. Die Steuerung und Überwachung des mobilen Endgerätes 30 übernimmt wiederum eine programmierbare Steuereinrichtung 34. Das mobile Endgerät 40 weist eine Vergleichereinrichtung 43 auf, die das im Speicher 41 hinterlegte eigene Nutzerprofil 2 mit den im Speicher 42 zwischengespeicherten Profilen 1, 3 und 4 der übrigen mobilen Endgeräte vergleichen kann. Die Steuerung und Überwachung des mobilen Endgerätes 40 übernimmt wiederum eine programmierbare Steuereinrichtung 44. Das mobile Endgerät 50 weist eine Vergleichereinrichtung 53 auf, die das im Speicher 51 hinterlegte eigene Nutzerprofil 4 mit den im Speicher 52 zwischengespeicherten Profilen 1, 2 und 3 der übrigen mobilen Endgeräte vergleichen kann. Die Steuerung und Überwachung des mobilen Endgerätes 50 erfolgt über eine programmierbare Steuereinrichtung 54.

Die mobile Netzwerkumgebung 10 kann wenigstens ein weiteres Adhoc-Netz 130 umfassen, welches durch beispielsweise drei mobile Endgeräte 90, 100 und 110 gebildet wird. Die mobilen Endgeräte 90, 100 und 110 sind ähnlich aufgebaut wie die mobilen Endgeräte 20, 30, 40 und 50. So weist das mobile Endgerät 90 einen Speicher 91 auf, in dem das vom Nutzer eingegebene eigene Nutzerprofil 5 hinterlegt ist. Ein Speicher 92 dient dazu, Nutzerprofile anderer mobiler Endgeräte zu speichern. Im vorliegenden Beispiel sei zunächst angenommen, dass lediglich die Nutzerprofile 6 und 7 der mobilen Endgeräte 100 und 110 im Speicher 92 zwischengespeichert worden sind. Eine Vergleichereinrichtung 93 kann wiederum die im Speicher 91 und die im Speicher 92 gespeicherten Nutzerprofile miteinander vergleichen. Die Überwachung und Steuerung des mobilen Endgerätes 90 übernimmt eine programmierbare Steuereinrichtung 94. Das mobile Endgerät 100 weist einen Speicher 101 auf, in dem das eigene Nutzerprofil 6 hinterlegt ist. In einem Speicher 102 sind die Nutzerprofile 5 und 7 der mobilen Endgeräte 90 und 110 zwischengespeichert, die wie zuvor in Verbindung mit dem Adhoc-Netz 120 erläutert, untereinander ausgetauscht worden sind. Ein Vergleicher 103 kann die in den Speichern 101 und 102 abgelegten Nutzerprofile miteinander vergleichen. Die Steuerung des mobilen Endgerätes 100 übernimmt ein programmierbarer Mikroprozessor 104.

Das mobile Endgerät 110 weist einen Speicher 111 auf, in dem das eigene Nutzerprofil 7 hinterlegt ist. Die in den übrigen mobilen Endgeräten 90 und 100 hinterlegten Nutzerprofile 5 bzw. 6 werden in einem Speicher 112 zwischengespeichert. Wiederum ist ein Vergleicher 113 vorgesehen, der das im Speicher 111 hinterlegte Nutzerprofil 7 mit den Speicher 112 zwischengespeicherten Nutzerprofilen vergleichen kann. Ein Mikroprozessor 114 sorgt für die Überwachung und Steuerung des mobilen Endgerätes 110.

Weiterhin enthält die mobile Netzwerkumgebung 10 ein weiteres Funknetz 70, beispielsweise ein drahtloses lokales Netzwerk (WLAN). Das WLAN 70 enthält lediglich der einfacheren Darstellung wegen nur zwei Zugangspunkte 60 und 80; die auch access points genannt werden. Der Ausdruck hybride Netzwerkumgebung rührt daher, dass das WLAN 70 und die Adhoc-Netze 120 und 130 unterschiedliche Kommunikationsstandards anwenden.

Im vorliegenden Beispiel sei angenommen, dass der Zugangspunkt 60 für den betrachteten Zeitpunkt den mobilen Endgeräten 20, 30, 40 und 50 des Adhoc-Netzes 120 zugeordnet ist, während der Zugangspunkt 80 den mobilen Endgeräten 90, 100 und 110 des anderen Adhoc-Netzes 130 zugeordnet ist. Denkbar ist auch, dass jedem Zugangspunkt mobile Endgeräte verschiedener Adhoc-Netze zugeordnet sein können. Angemerkt sei an dieser Stelle noch einmal, dass es sich bei den Adhoc-Netzen 120 und 130 um sogenannte Nahbereichs- oder Kurzstreckenfunknetze handelt. Um mit dem WLAN 70 kommuniziern zu können, weisen die mobilen Endgeräte 20 bis 50 und 90 bis 110 jeweils eine WLAN-Funkschnittstelle 26, 36, 46, 56, 96, 106 bzw. 116 auf.

Wie nachfolgend noch näher erläutert wird, dient das WLAN 70 dazu, die beiden Adhoc-Netze 120 und 130 miteinander zu verbinden, um die Reichweite zum Auffinden eines geeigneten Kommunikationspartners zu erweitern. Anstelle des WLANs 70 kann auch ein öffentliches Mobilfunknetz, beispielsweise ein UMTS- oder GSM-Mobilfunknetz diese Aufgabe übernehmen, wobei dann die Zugangspunkte 60 und 80 durch entsprechende Basisstationen auszutauschen sind.

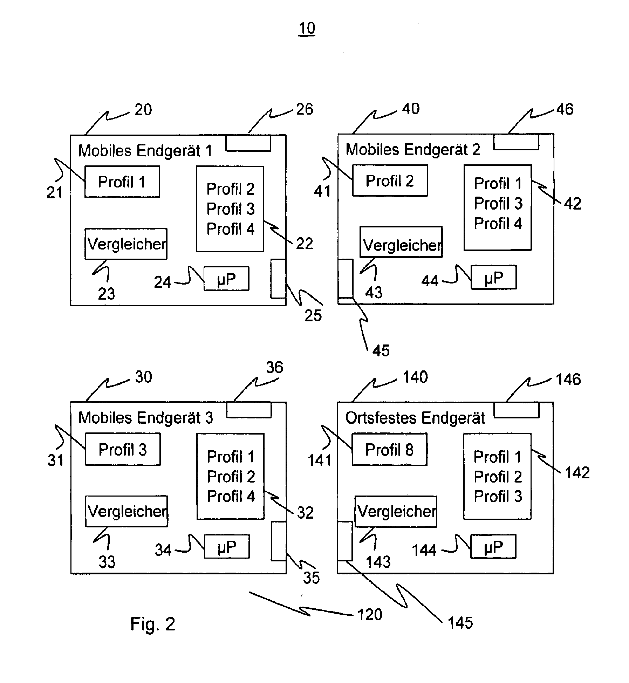

Fig. 2 zeigt eine weitere Ausführungsform einer mobilen Netzwerkumgebung, in der sich die mobilen Endgeräte 20, 30 und 40 mit Hilfe einer ortsfesten Kommunikationsendeinrichtung 140 geeignete Kommunikationspartner suchen können. Ortsfeste Kommunikationsendeinrichtung sind zum Beispiel PCs, Notebooks, Terminals und dergleichen, die an einem Messestand aufgestellt sein können. Die ortsfeste Endeinrichtung 140 weist einen Speicher 141 auf, in dem wenigstens ein Nutzerprofil 8 beispielsweise eines Mitarbeiters hinterlegt ist. In einem weiteren Speicher 142 werden die Nutzerprofile 1, 2 und 3 der mobilen Endgeräte 20, 40 bzw. 30 zwischengespeichert, wenn sich das mobile Endgeräte 20, 30 und/oder 40 zusammen mit der ortsfesten Kommunikationsendeinrichtung 140 innerhalb einer Kurstreckenfunkzone befinden. Um Nutzerprofile mit den mobilen Endgeräten 20, 30 und 40 austauschen zu können, weist die Kommunikationsendeinrichtung 140 eine Bluetooth-Funkschnittstelle 145 auf. Die ortsfeste Kommunikationsendeinrichtung 140 kann eine weitere Funkschnittstelle 146 zur Kommunikation über ein WLAN oder ein öffentliches Mobilfunknetz aufweisen. Eine Vegleichereinrichtung 143 kann die in den Speichern 141 und 142 abgelegten Nutzerprofile vergleichen. Die Überwachung und Steuerung der ortsfesten Kommunikationsendeinrichtung 140 übernimmt eine programmierbare Steuereinrichtung 144.

Nachfolgend wird die Funktionsweise der mobilen Netzwerkumgebung in Verbindung mit den Figuren 1 und 2 näher erläutert.

### Erstes Szenario

Angenommen sei, dass die mobilen Endgeräte 20, 30, 40 und 50 aktiv sind und sich innerhalb einer Kurzstreckenfunkzone befinden, die durch das Adhoc-Netz 120 abgedeckt wird. Weiterhin sei angenommen, dass in jedem mobilen Endgerät, welches vorzugsweise ein Mobiltelefon ist, eine entsprechende Anwendersoftware "geeigneten Kommunikationspartner finden" installiert ist, die das Auffinden eines geeigneten Kommunikationspartners steuert. Vorzugsweise verfügt jedes Mobiltelefon über eine UICC (Universal Integrated Circuit Card), die beispielsweise durch die Funktionsblöcke 24, 34, 44, 54, 94, 104 und 114 dargestellt ist. Um geeignete Kommunikationspartner identifizieren zu können, kann in den Speichern 22, 32, 42, 52 neben den Nutzerprofilen die Mobilfunknummer der jeweiligen mobilen Endgeräte gespeichert sein. So sind beispielsweise im Speicher 22 des mobilen Endgerätes 20 die Profile 2, 3 und 4 der mobilen Endgeräte 30, 40 und 50 sowie deren Mobilfunknummern zwischengespeichert. In ähnlicher Weise sind in den Speichern 32, 42 und 52 der mobilen Endgeräte 30, 40 beziehungsweise 50 neben den zwischengespeicherten Nutzerprofilen auch die Mobilfunknummern der jeweiligen mobilen Endgeräte abgespeichert. Die Mobilfunknummern werden zusammen mit den Nutzerprofilen unter den mobilen Endgeräten ausgetauscht.

Angenommen sei zum Beispiel, dass sich die Nutzer der mobilen Endgeräte 20, 30, 40 und 50 auf einem Messegelände befinden, auf dem beispielsweise eine Buchmesse stattfindet. In diesem Fall könnte beispielsweise das im Speicher 21 hinterlegte Nutzerprofil 1 eine Information enthalten, die darauf hinweist, das der Nutzer des Mobiltelefons 20 sich für englischsprachige Literatur interessiert. Das im Speicher 31 des mobilen Endgerät 30 hinterlegte Profil 3 kann beispielsweise eine Angabe über Sportliteratur enthalten. Das im Speicher 41 des mobilen Endgerätes 40 hinterlegte Nutzerprofil enthält beispielsweise einen Hinweis auf australische Literatur. Das im Speicher 51 des mobilen Endgerätes 50 hinterlegte Nutzerprofil enthält beispielsweise Angaben über deutschsprachige Romane. Die in den Speichern 22, 32, 42 und 52 zwischengespeicherten Profile werden vorzugsweise für eine vorbestimmte Zeit abgelegt. Nach Ablauf der vom Nutzer einstellbaren vorbestimmten Zeit, beispielsweise 24 Stunden, werden die Inhalte dieser Speicher gelöscht.

Möchte nunmehr beispielsweise der Nutzer des mobilen Endgerätes 20 herausfinden, ob in seiner Nähe, das heißt innerhalb des Adhoc-Netzes 120 ein Kommunikationspartner ist, der für ihn wichtige Informationen liefern könnte, so aktiviert er zunächst seine Anwendung "geeigneten Kommunikationspartner finden" an seinem Mobiltelefon 20. Daraufhin veranlasst der Mikroprozessor 24 die Vergleichereinheit 23, die im Speicher 22 zwischengespeicherten Nutzerprofile 2, 3 und 4 mit dem eigenen im Speicher 21 hinterlegten Nutzerprofil 1 zu vergleichen.

Im vorliegenden Beispiel stellt die Vergleichereinrichtung 23 fest, dass zumindest eine teilweise Übereinstimmung zwischen dem eigenen Nutzerprofil 1 und dem im Speicher 22 zwischengespeicherten Nutzerprofil 2 hinsichtlich englischsprachiger Literatur vorliegt. Daraufhin liest der Mikroprozessor 24 die zum mobilen Endgerät 40 gehörende Mobilfunknummer aus dem Speicher 22 aus und zeigt sie am mobilen Endgerät 20 an. Der Nutzer des mobilen Endgerätes 20 wird somit darüber informiert, dass innerhalb des Adhoc-Netzes 120 ein Kommunikationspartner, nämlich der Nutzer des mobilen Endgerätes 40 interessante Informationen für ihn bereithalten könnte. In ähnlicher Weise könnte, sofern der Nutzer des mobilen Endgerätes 40 einen geeigneten Kommunikationspartner sucht, die Vergleichereinrichtung 43 feststellen, dass eine zumindest teilweise Ähnlichkeit zwischen dem eigenen Nutzerprofil 2 und dem im Speicher 42 zwischengespeicherten Nutzerprofil 1 besteht. Der Mikroprozessor 44 des mobilen Endgerätes sorgt dann dafür, dass die Mobilfunknummer des mobilen Endgerätes 20 am mobilen Endgerät 40 dem Nutzer angezeigt wird. Unter Verwendung der Mobilfunknummer des mobilen Endgerätes 40 kann nun der Nutzer des mobilen Endgerätes 20 beispielsweise über ein öffentliches Mobilfunknetz eine Gesprächsverbindung aufbauen.

Ein Vorteil des Szenarios 1 ist darin zu sehen, dass die Nutzer der mobilen Endgeräte 20, 30, 40 und 50 keine Kosten für die Verbreitung der Nutzerprofile und der Kommunikation zahlen müssen, solange sie sich innerhalb des Adhoc-Netzes 120 bewegen.

### Zweites Szenario

Angenommen sei wieder, dass die mobilen Endgeräte 20, 30, 40 und 50 das Adhoc-Netz 120 bilden und die in Fig. 1 gezeigten Speicherinhalte enthalten. Weiter sei angenommen, dass der Nutzer des mobilen Endgerätes 20 die Anwendung "geeigneten Kommunikationspartner finden" aktiviert hat.

Im Unterschied zum ersten Szenario existiere in einer benachbarten Messehalle ein weiteres Netzwerk, nämlich das Adhoc-Netz 130, welches die mobilen Endgeräte 90, 100 und 110 umfasst. Bei den mobilen Endgeräten 90, 100 und 110 kann es sich ebenfalls um Mobiltelefone handeln. Im Speicher 91 des mobilen Endgeräts 90 ist ein Nutzerprofil hinterlegt, welches anzeigt, dass der Nutzer Interesse an Astronomie hat. Die in den Speichern 101 und 111 hinterlegten Nutzerprofile der mobilen Endgeräte 100 und 110 enthalten Hinweise auf Kunstgeschichte. Angenommen sei ferner, dass auf den mobilen Endgeräte 90, 100 und 110 allesamt die Anwendung "geeigneten Kommunikationspartner finden" aktiviert ist.

Ferner sei angenommen, dass der Nutzer des mobilen Endgerätes 20 das eigene Nutzerprofil 1 insoweit abgeändert hat, als er nunmehr Interesse für naturwissenschaftliche Literatur hat. Der Austausch des neuen Nutzerprofils 1 mit den mobilen Endgeräten 30, 40 und 50 sei bereits erfolgt. Demzufolge stellt die Vergleichereinrichtung 23 fest, dass es im Adhoc-Netz 120 keinen geeigneten Kommunikationspartner für den Nutzer des Mobiltelefons 20 gibt.

Weiterhin sei angenommen, dass der Nutzer des mobilen Endgerätes 30 das Adhoc-Netz 120 verlassen und sich in die Kurzstreckenfunkzone des Adhoc-Netzes 130 hinein bewegt hat. Sobald das mobile Endgerät 30 als neuer Teilnehmer des Adhoc-Netzes 130 erkannt wird, tauschen die mobilen Endgeräte 90, 100, 110 und 30 ihre Nutzerprofile aus. Das mobile Endgerät 30 überträgt sowohl das eigene im Speicher 31 hinterlegte Nutzerprofil 3 als auch die im Speicher 32 zwischengespeicherten Nutzerprofile 1, 2 und 4 der mobilen Endgeräte 20, 40 bzw. 50. Diese Profile werden zumindest im mobilen Endgerät 90, und zwar im Speicher 92 zwischengespeichert. Demzufolge enthält der Speicher 92 alle Nutzerprofile der mobilen Endgeräte 20, 30, 40 und 50 des Adhoc-Netzes 120 sowie die Nutzerprofile der Endgeräte 100 und 110 des Adhoc-Netzes 130. In der Regel werden die Nutzerprofile 1 bis 4 der mobilen Endgeräte 20 bis 50 auch in den Speicher 102 und 112 der mobilen Endgeräte 100 beziehungsweise 110 zwischengespeichert. In gleicher Weise können die mobilen Endgeräte 90, 100 und 110 die gespeicherten Nutzerprofile zum mobilen Endgerät 30 übertragen. Im Speicher 32 des mobilen Endgeräts 30 werden dann nicht nur die Profile 1, 2 und 4 der mobilen Endgeräte 20, 40 und 50, sondern auch die Nutzerprofile der mobilen Endgeräte 90, 100 und 110 des Adhoc-Netzes 130 zwischengespeichert. Angemerkt sei, dass die Mikroprozessoren der jeweiligen mobilen Endgeräte derart ausgebildet sind, dass sie jedes Nutzerprofil nur ein einziges Mal in die Zwischenspeicher 22, 32, 42, 52, 92, 102 beziehungsweise 112 einschreiben.

Der Vergleicher 93 des mobilen Endgerätes 90 stellt nunmehr fest, dass das im Speicher 91 hinterlegte Profil 5 zumindest teilweise mit dem im Speicher 92 zwischengespeicherten Nutzerprofil 1 übereinstimmt. Der Mikroprozessor 94 sorgt nunmehr dafür, dass die im Speicher 92 hinterlegte Mobilfunknummer des mobilen Endgerätes 20 am mobilen Endgerät 90 angezeigt wird. Daraufhin kann der Nutzer des mobilen Endgerätes 90 beispielsweise über ein mobiles Funknetz eine Kommunikationsverbindung zum mobilen Endgerät 20 aufbauen. Auf diese Weise findet der Nutzer des mobilen Endgerätes 20 indirekt einen Kommunikationspartner, der sich nicht in seinem eigenen, sondern im Adhoc-Netz 130 befindet. Dieser Effekt kann sich über mehrere getrennte Adhoc-Netze fortpflanzen.

### Drittes Szenario

Die Ausgangssituation entspricht der des zweiten Szenarios. Das heißt, der Nutzer des Mobiltelefons kann im Adhoc-Netz 120 keinen geeigneten Kommunikationspartner finden.

Gemäß Szenario 2 werden Nutzerprofile von mobilen Endgeräten verschiedener Adhoc-Netze dadurch ausgetauscht, dass die Nutzer zwischen den verschiedenen Adhoc-Netzen 120 und 130 hin und her wandern.

Im Unterschied hierzu können Nutzerprofile zwischen den verschiedenen Adhoc-Netzen 120 und 130 auch über das WLAN 70 ausgetauscht werde, indem eine Kommunikationsverbindung zwischen dem Adhoc-Netz 120 und dem Adhoc-Netz 130 hergestellt wird.

Wiederum sei angenommen, dass der Nutzer des mobilen Endgerätes 20 keinen geeigneten Kommunikationspartner im Adhoc-Netz 120 gefunden hat.

Das mobile Endgerät 20 kann über die WLAN-Funkschnittstelle 26 mit dem Zugangspunkt 60 kommunizieren. Der Zugangspunkt 60 ist derart implementiert, dass er nach einem weiteren Adhoc-Netz beziehungsweise nach mobilen Endgeräten, die ein anderes Adhoc-Netz bilden, suchen kann. Hierzu ist erforderlich, dass im Zugangspunkt 60 alle angemeldeten mobilen Endgeräte 20, 30, 40 und 50 und ein Hinweis darüber gespeichert werden, in welchem Adhoc-Netz sich die mobilen Endgeräte befinden. Im vorliegenden Beispiel erkennt der Zugangspunkt 60, dass er kein weiteres Adhoc-Netz versorgt. Daraufhin überträgt der Zugangspunkt 60 die vom mobilen Endgerät 20 kommende Anforderung zur Suche eines geeigneten Kommunikationspartners zu dem weiteren Zugangspunkt 80. Der Zugangspunkt 80 kennt wiederum alle mobilen Endgeräte 90, 100 und 110, die ihm zugeordnet sind, sowie das Adhoc-Netz 130, denen die mobilen Endgeräte 90, 100 und 110 zugeordnet sind. Im vorliegenden Beispiel weiß der Zugangspunkt 80, dass das mobile Endgerät 90 am Zugangspunkt 80 angemeldet ist. Der Zugangspunkt 80 meldet dem Zugangspunkt 60, dass ein weiteres Adhoc-Netz, nämlich das Adhoc-Netz 130, erreichbar ist. Daraufhin fordert der Zugangspunkt 60 das mobile Endgerät 20 auf, das im Speicher 21 hinterlegte eigene Nutzerprofil sowie die im Speicher 22 zwischengespeicherten Nutzerprofile zu übertragen. Die Nutzerprofile 1 bis 4 werden dann vom Zugangspunkt 60 über das WLAN 70 zum Zugangspunkt 80 und von dort zum mobilen Endgerät 90 übertragen und im Speicher 92 zwischengespeichert. In zuvor beschriebener Weise reicht das mobile Endgerät 90 die empfangenen Profile 1 bis 4 zum mobilen Endgerät 100 und/oder zum mobilen Endgerät 110 weiter. Zusätzlich oder alternativ wird das mobile Endgerät 90 vom Zugangspunkt 80 aufgefordert, das im Speicher 91 hinterlegte eigene Nutzerprofil und/oder die im Speicher 92 zwischengespeicherten Profile 6 und 7 zum mobilen Endgerät 20 zu übertragen. Auf diese Weise findet ein vollständiger Austausch der Nutzerprofile zwischen den mobilen Endgeräten des Adhoc-Netzes 120 und den mobilen Endgeräten des Adhoc-Netzes 130 statt.

Nachdem die Anwendung "geeigneten Kommunikationspartner suchen" am Mobiltelefon 20 aktiviert worden ist, veranlasst der Mikroprozessor 24 des mobilen Endgerätes 20 die Vergleichereinrichtung 23, das im Speicher 21 hinterlegte eigene Nutzerprofil mit den im Speicher 22 zwischengespeicherten Profile, das sind die Profile 2, 3, 4, 5, 6 und 7 zu vergleichen. Im angenommenen Fall wird die Vergleichereinrichtung 23 feststellen, dass das Nutzerprofil 5 (Astronomie) des mobilen Endgerätes 90 zumindest teilweise mit dem eigenen im Speicher 21 hinterlegten Profil 1 (naturwissenschaftliche Literatur) übereinstimmt. Der Mikroprozessor 23 sorgt dann wieder dafür, dass die Mobilfunknummer des mobilen Endgerätes 90 aus dem Speicher 22 ausgelesen und am mobilen Endgerät 20 angezeigt wird. Unter Verwendung der angezeigten Mobilfunknummer kann das mobile Endgerät 20 beispielsweise über ein öffentliches Mobilfunknetz eine Gesprächsverbindung zum mobilen Endgerät 90 aufbauen.

Mit Hilfe des WLAN 70 ist es somit möglich, verschiedene Adhoc-Netze, die beispielsweise in verschiedenen Messehallen gebildet worden sind, miteinander zu verbinden.

Auf diese Weise wird die Reichweite zum Finden geeigneter Kommunikationspartner auf mehrere Adhoc-Netze erweitert.

Mit Hilfe eines öffentlichen Mobilfunknetzes, beispielsweise einem UMPS- oder GSM-Mobilfunknetz ist es möglich, weiter auseinander liegende Adhoc-Netze miteinander zu verbinden. In diesem Fall werden die erforderlichen Informationen und Steuerdaten zum Verbinden der Adhoc-Netze in Basisstationen und/oder einer zentralen Verwaltungseinrichtung gespeichert. Die Steuerdaten enthalten beispielsweise Daten über alle mobilen Endgeräte, die an der Anwendung "geeigneten Kommunikationspartner suchen" teilnehmen und darüber, welche mobilen Endgeräte mit welchem Adhoc-Netz verbunden sind.

### Viertes Szenario

Nunmehr wird Fig. 2 betrachtet.

Angenommen sei nunmehr, dass ein Anbieter auf dem Bluetooth-fähigen ortsfesten Rechner 140 die Anwendung "geeignete Kommunikationspartner finden" einsetzen und zusätzlich die Profile der eigenen Mitarbeiter an seinem Messestand anbieten möchte. Auf diese Weise erhalten Gäste, die vor einem überfüllten Stand warten, die Möglichkeit, herauszufinden, ob es an dem Stand überhaupt interessante Gesprächspartner gibt.

In einem Speicher 141 des ortsfesten Rechners 140 sind mehrere Profile 8 der eigenen Mitarbeiter hinterlegt. Darüber hinaus sind im Speicher 142 bereits die Nutzerprofile 2 und 3 der mobilen Endgeräte 30 und 40 hinterlegt, die zu einem früheren Zeitpunkt in der Nähe des ortsfesten Rechners 140, d. h. innerhalb dessen Kurzstrecken-Funkreichweite, gelangt sind. Die mobilen Endgeräte 30 oder 40 können, sobald sie sich innerhalb der Reichweite des ortsfesten Rechners 140 aufhalten, nicht nur ihre eigenen Profile, sondern auch die im Speicher 32 beziehungsweise 42 zwischengespeicherten Profile an den ortsfesten Rechner 140 übertragen. In umgekehrter Richtung kann auch der ortsfeste Rechner 140 die im Speicher 141 hinterlegten eigenen Profile sowie die im Speicher 142 zwischengespeicherten Profile an die mobilen Endgeräte 30 und 40 übertragen.

Nunmehr sei angenommen, dass der Nutzer des mobilen Endgerätes 20 am Messestand, an dem der ortsfeste Rechner 140 aufgestellt ist, vorbeiläuft. Sobald sich der ortsfeste Rechner 140 und das mobile Endgerät 20 gegenseitig identifiziert haben, überträgt das mobile Endgerät 20 zumindest das eigene Nutzerprofil 1 zum ortsfesten Rechner 140. Das Nutzerprofil 1 wird dann ebenfalls im Speicher 142 des ortsfesten Rechners 140 zwischengespeichert.

Bei einer vorteilhaften Ausführungsvariante überträgt der ortsfeste Rechner 140 die eigenen Nutzerprofile 8 sowie die Nutzerprofile 2 und 3 der mobilen Endgeräte 30 und 40 zum mobilen Endgerät 20. Angenommen sei, dass sowohl ein im Speicher 141 hinterlegtes Nutzerprofil eines Mitarbeiters als auch das Nutzerprofil 2 mit dem im mobilen Endgerät 20 hinterlegten Profil 1 zumindest teilweise übereinstimmen. Alle besagten Nutzerprofile betreffen beispielsweise englischsprachige Literatur. Unter Steuerung der Mikroprozessoreinrichtung 24 vergleicht die Vergleichereinrichtung 23 das eigene im Speicher 21 hinterlegte Nutzerprofil mit den vom ortsfesten Rechner 140 übertragenen und im Speicher 22 zwischengespeicherten Nutzerprofilen. Die Vergleichereinrichtung 23 stellt fest, dass ein Profil 8 eines der Mitarbeiter sowie das Nutzerprofil 2 des mobilen Endgerätes 40 teilweise mit dem eigenen Nutzerprofil 1 im Speicher 21 übereinstimmen. Daraufhin sorgt der Mikroprozessor 24 dafür, dass dem Nutzer des mobilen Endgeräts 20 ein entsprechender Hinweis angezeigt wird, dass am Messestand des ortsfesten Rechners 140 ein geeigneter Gesprächspartner steht. Alternativ oder zusätzlich kann am mobilen Endgerät 20 auch die Rufnummer des ortsfesten Rechners 140 und/oder die Mobilfunknummer des mobilen Endgerätes 40 angezeigt werden. Der Nutzer des mobilen Endgerätes 20 kann sich nunmehr entscheiden, am Stand auf einen freien Mitarbeiter zu warten oder den Nutzer des mobilen Endgerätes 40 anzurufen.

Ein Vorteil dieser Ausführungsvariante ist darin zu sehen, dass Messebesucher ohne zusätzliche Kosten durch kostenpflichtige Funkverbindungen in dem ortsfesten Rechner 140 ihre eigenen Profile parken können, die dann an Dritte weitergereicht werden. Ein weiterer Vorteil besteht darin, dass das System den Kontakt zwischcen Besucher und Anbieter durch Vorselektion verbessert.

Denkbar ist auch, dass der ortsfeste Rechner 140 das aktuell vom mobilen Endgerät 20 empfangene Nutzerprofil 1 mit den in den Speichern 141 und 142 abgelegten Nutzerprofilen vergleicht. Stellt die Vergleichereinrichtung 143 des ortsfesten Rechners 140 zumindest eine teilweise Übereinstimmung 140 zwischen dem Nutzerprofil 1 und wenigstens einem der gespeicherten Nutzerprofile 8, 2 und 3 fest, so wird ein entsprechender Hinweis zum mobilen Endgerät 20 übertragen. Der Hinweis kann eine Rufnummer enthalten, die zusammen mit dem Nutzerprofil des entsprechenden mobilen Endgeräts im ortsfesten Rechner 140 gespeichert worden ist. Diese Hinweise können vom ortsfesten Rechner 140 über die Bluetooth-Funkschnittstelle 142 oder über die WLAN-Schnittstelle 146 zum mobilen Endgerät übertragen werden.

## Patentansprüche

1. Verfahren zum Auffinden eines Kommunikationspartners in einer mobilen Netzwerkumgebung (10), mit folgenden Schritten:
a) Hinterlegen jeweils eines Nutzerprofils in mehreren ersten mobilen Endgeräten (20, 30, 40, 50);
b) Austauschen der Nutzerprofile zwischen den ersten mobilen Endgeräte (20, 30, 40, 50), die ein erstes Kurzstreckenfunknetz (120) bilden;
c) Zwischenspeichern, in jedem ersten mobilen Endgerät (20, 30, 40, 50) des ersten Kurzstreckenfunknetzes (120), der Nutzerprofile der jeweils anderen ersten mobilen Endgeräte (20, 30, 40, 50) des ersten Kurzstreckenfunknetzes (120);
d) Vergleichen in wenigstens einem ersten mobilen Endgerät (20) des ersten Kurzstreckenfunknetzes (120) das darin hinterlegte Nutzerprofil mit den zwischengespeicherten Nutzerprofilen; und
e) Bereitstellen bei zumindest teilweiser Übereinstimmung zwischen dem hinterlegten Nutzerprofil und mindestens einem zwischengespeicherten Nutzerprofil einer Informationsmeldung dem ersten mobilen Endgeräte (20), in dem das zu vergleichende Nutzerprofil hinterlegt ist, und/oder dem wenigstens einen anderen ersten mobilen Endgerät (30), in dem das wenigstens teilweise mit dem hinterlegten Nutzerprofil übereinstimmte Nutzerprofil hinterlegt worden ist,
**dadurch gekennzeichnet, dass**
sich wenigstens ein erstes mobiles Endgerät (30) des ersten Kurzstreckenfunknetzes (120) in ein zweites Kurzstreckenfunknetz (130) hinein bewegt, welches durch mehrere zweite mobile Endgeräte (90, 100, 110) gebildet wird, wobei in jedem zweiten mobilen Endgerät ein Nutzerprofil hinterlegt und die Nutzerprofile der anderen zweiten mobilen Endgeräte zwischengespeichert sind, dass das in dem ersten mobilen Endgerät (30) hinterlegte Nutzerprofil und/oder die darin zwischengespeicherten Nutzerprofile zu den zweiten mobilen Endgeräten (90, 100, 110) übertragen werden, und/oder dass
das in wenigstens einem dem zweiten mobilen Endgeräte (90, 100, 110) hinterlegte Nutzerprofil und/oder die darin zwischengespeicherten Nutzerprofile zu dem ersten mobilen Endgerät (30) übertragen werden.

2. Verfahren zum Auffinden eines Kommunikationspartners in einer mobilen Netzwerkumgebung (10), mit folgenden Schritten:
a) Hinterlegen jeweils eines Nutzerprofils in mehreren ersten mobilen Endgeräten (20, 30, 40, 50);
b) Austauschen der Nutzerprofile zwischen den ersten mobilen Endgeräte (20, 30, 40, 50), die ein erstes Kurzstreckenfunknetz (120) bilden;
c) Zwischenspeichern, in jedem ersten mobilen Endgerät (20, 30, 40, 50) des ersten Kurzstreckenfunknetzes (120), der Nutzerprofile der jeweils anderen ersten mobilen Endgeräte (20, 30, 40, 50) des ersten Kurzstreckenfunknetzes (120);
d) Vergleichen in wenigstens einem ersten mobilen Endgerät (20) des ersten Kurzstreckenfunknetzes (120) das darin hinterlegte Nutzerprofil mit den zwischengespeicherten Nutzerprofilen; und
e) Bereitstellen bei zumindest teilweiser Übereinstimmung zwischen dem hinterlegten Nutzerprofil und mindestens einem zwischengespeicherten Nutzerprofil einer Informationsmeldung dem ersten mobilen Endgeräte (20), in dem das zu vergleichende Nutzerprofil hinterlegt ist, und/oder dem wenigstens einen anderen ersten mobilen Endgerät (30), in dem das wenigstens teilweise mit dem hinterlegten Nutzerprofil übereinstimmte Nutzerprofil hinterlegt worden ist,
**dadurch gekennzeichnet, dass**
wenigstens ein erstes mobiles Endgerät (20) des ersten Kurzstreckenfunknetzes (12 0) den Aufbau einer Kommunikationsverbindung über ein separates Funknetz (70), insbesondere ein WLAN oder ein öffentliches Mobilfunknetz, zu einem zweiten Kurzstreckenfunknetz (130) einleitet, welche durch mehrere zweite mobile Endgeräte (90, 100, 110) gebildet wird, wobei in jedem zweiten mobilen Endgerät (90, 100, 110) ein Nutzerprofil hinterlegt und die Nutzerprofile der anderen zweiten mobilen Endgeräte zwischengespeichert sind, und dass über die aufgebaute Kommunikationsverbindung das in dem ersten mobilen Endgerät (20) hinterlegte Nutzerprofil und/oder die darin zwischengespeicherten Nutzerprofile zu wenigstens einem der zweiten mobilen Endgeräte (90, 100, 110) übertragen werden.

3. Verfahren nach Anspruch 2, **dadurch gekennzeichnet, dass** über die aufgebaute Kommunikationsverbindung das in einem zweiten mobilen Endgerät (90) hinterlegte Nutzerprofil und/oder die darin zwischengespeicherten Nutzerprofile der anderen zweiten mobilen Endgeräte zum ersten mobilen Endgerät (20) übertragen werden.

4. Verfahren nach einem der Ansprüche 1 bis 3, **dadurch gekennzeichnet, dass**
in wenigstens einem zweiten mobilen Endgerät (90) das hinterlegte Nutzerprofil mit den zwischengespeicherten Nutzerprofilen, welche die Nutzerprofile der ersten mobilen Endgeräte (20, 30, 40, 50) enthalten, verglichen wird, und dass bei zumindest teilweiser Übereinstimmung zwischen dem hinterlegten Nutzerprofil und mindesten einem zwischengespeicherten Nutzerprofil eine Informationsmeldung für das wenigstens eine zweite mobile Endgerät (90) und/oder für das erste mobile Endgerät (20), in welchem das wenigstens teilweise übereinstimmende Nutzerprofil hinterlegt worden ist, bereitgestellt wird.

5. Verfahren nach einem der Ansprüche 1 bis 4, **dadurch gekennzeichnet, dass**
in dem wenigstens einen ersten mobilen Endgerät (20) das hinterlegte Nutzerprofil mit den zwischengespeicherten Nutzerprofilen, welche die Nutzerprofile der zweiten mobilen Endgeräte (90, 100, 110) enthalten, verglichen wird, und dass bei zumindest teilweiser Übereinstimmung zwischen dem hinterlegten Nutzerprofil und mindesten einem zwischengespeicherten Nutzerprofil eine Informationsmeldung für das wenigstens eine erste mobile Endgerät (20) und/oder für das zweite mobile Endgerät (90), in welchem das wenigstens teilweise übereinstimmende Nutzerprofil hinterlegt worden ist, bereitgestellt wird.

6. Verfahren nach einem der vorhergehenden Ansprüche, **dadurch gekennzeichnet, dass**
das erste und/oder zweite Kurzstreckenfunknetz (120, 130) jeweils ein Adhoc-Netzwerk, insbesondere gemäß dem Bluetooth-Standard bilden.

## Claims

1. A method for locating a communication partner in a mobile network environment (10), comprising the steps of:
a) storing a user profile in each of a plurality of first mobile terminals (20, 30, 40, 50);
b) exchanging the user profiles between the first mobile terminals (20, 30, 40, 50) which form a first short range radio network (120);
c) caching, in each of the first mobile terminals (20, 30, 40, 50) of the first short range radio network (120), the user profiles of the respective other of the first mobile terminals (20, 30, 40, 50) of the first short range radio network (120);
d) comparing, in at least one first mobile terminal (20) of the first short range radio network (120), the user profile stored therein with the cached user profiles; and
e) in case of at least a partial match between the stored user profile and at least one cached user profile, providing an information message to the first mobile terminal (20) in which the user profile to be compared is stored, and/or to the at least one other first mobile terminal (30) in which the user profile had been stored that at least partially matches the stored user profile;
**characterized in that**
at least one first mobile terminal (30) of the first short range radio network (120) moves into a second short range radio network (130) which is formed by a plurality of second mobile terminals (90, 100, 110), wherein each second mobile terminal has stored therein a user profile and has cached therein the user profiles of the other second mobile terminals; that
the user profile stored in the first mobile terminal (30) and/or the user profiles cached therein is/are transmitted to the second mobile terminals (90, 100, 110); and/or that
the user profile stored in at least one of the second mobile terminals (90, 100, 110) and/or the user profiles cached therein are transferred to the first mobile terminal (30).

2. A method for locating a communication partner in a mobile network environment (10), comprising the steps of:
a) storing a user profile in each of a plurality of first mobile terminals (20, 30, 40, 50);
b) exchanging the user profiles between the first mobile terminals (20, 30, 40, 50) which form a first short range radio network (120);
c) caching, in each of the first mobile terminals (20, 30, 40, 50) of the first short range radio network (120), the user profiles of the respective other of the first mobile terminals (20, 30, 40, 50) of the first short range radio network (120);
d) comparing, in at least one first mobile terminal (20) of the first short range radio network (120), the user profile stored therein with the cached user profiles; and
e) in case of at least a partial match between the stored user profile and at least one cached user profile, providing an information message to the first mobile terminal (20) in which the user profile to be compared is stored, and/or to the at least one other first mobile terminal (30) in which the user profile had been stored that at least partially matches the stored user profile;
**characterized in that**
at least one first mobile terminal (20) of the first short range radio network (120) initiates establishment of a communication link to a second wireless personal area network (130) which is formed by a plurality of second mobile terminals (90, 100, 110), via a separate wireless network (70), in particular a WLAN or a public cellular network, wherein each of the second mobile terminals (90, 100, 110) has stored therein a user profile and has cached therein the user profiles of the other second mobile terminals; and that the user profile stored in the first mobile terminal (20) and/or the user profiles cached therein are transferred to at least one of the second mobile terminals (90, 100, 110) via the established communication link.

3. The method according to claim 2, **characterized in that** the user profile stored in a second mobile terminal (90) and/or the user profiles of the other second mobile terminals cached therein are transferred to the first mobile terminal (20) via the established communication link.

4. The method according to any of claims 1 to 3,
**characterized in that**
in at least one second mobile terminal (90) the user profile stored therein is compared with the cached user profiles which include the user profiles of the first mobile terminals (20, 30, 40, 50); and that in case of at least a partial match between the stored user profile and at least one cached user profile, an information message is provided to the second mobile terminal (90) and/or to the first mobile terminal (20) in which the at least partially matching user profile had been stored.

5. The method according to any of claims 1 to 4,
**characterized in that**
in the at least one first mobile terminal (20), the user profile stored-therein is compared with the cached user profiles which include the user profiles of the second mobile terminals (90, 100, 110); and that in case of at least a partial match between the stored user profile and at least one cached user profile, an information message is provided to the at least one first mobile terminal (20) and/or to the second mobile terminal (90) in which the at least partially matching user profile had been stored.

6. The method according to any of the preceding claims,
**characterized in that** the first and/or the second wireless personal area network (120, 130) define an ad hoc network, in particular according to the Bluetooth standard.

## Revendications

1. Procédé de recherche d'un interlocuteur dans un environnement de réseau mobile (10), comprenant les étapes suivantes :
a) mémorisation d'un profil d'utilisateur dans plusieurs premiers terminaux mobiles (20, 30, 40, 50) ;
b) échange des profils d'utilisateur entre les premiers terminaux mobiles (20, 30, 40, 50) qui forment un premier réseau radio de faible portée (120) ;
c) stockage temporaire, dans chaque premier terminal mobile (20, 30, 40, 50) du premier réseau radio de faible portée (120), du profil d'utilisateur des autres premiers terminaux mobiles (20, 30, 40, 50) respectifs du premier réseau radio de faible portée (120) ;
d) comparaison, dans au moins un premier terminal mobile (20) du premier réseau radio de faible portée (120), du profil d'utilisateur qui y est mémorisé avec les profils d'utilisateur stockés temporairement ; et,
e) en cas de concordance au moins partielle entre le profil d'utilisateur mémorisé et au moins un profil d'utilisateur stocké temporairement, délivrance d'un message d'information au premier terminal mobile (20) où est mémorisé le profil d'utilisateur à comparer, et/ou au premier terminal mobile ou aux premiers autres terminaux mobiles (30) où a été mémorisé le profil d'utilisateur concordant au moins partiellement avec le profil d'utilisateur mémorisé,
**caractérisé en ce que**
au moins un premier terminal mobile (30) du premier réseau radio de faible portée (120) pénètre dans un deuxième réseau radio de faible portée (130) formé par plusieurs deuxièmes terminaux mobiles (90, 100, 110), un profil d'utilisateur étant mémorisé dans chaque deuxième terminal mobile et les profils d'utilisateur des autres deuxièmes terminaux mobiles étant stockés temporairement, **en ce que** le profil d'utilisateur mémorisé dans le premier terminal mobile (30) et/ou les profils d'utilisateur qui y sont stockés temporairement sont transmis aux deuxièmes terminaux mobiles (90, 100, 110), et/ou **en ce que**
dans au moins le profil d'utilisateur mémorisé dans un des deuxièmes terminaux mobiles (90, 100, 110) et/ou les profils d'utilisateur qui y sont stockés temporairement sont transmis au premier terminal mobile (30).

2. Procédé de recherche d'un interlocuteur dans un environnement de réseau mobile (10), comprenant les étapes suivantes :
a) mémorisation d'un profil d'utilisateur dans plusieurs premiers terminaux mobiles (20, 30, 40, 50) ;
b) échange des profils d'utilisateur entre les premiers terminaux mobiles (20, 30, 40, 50) qui forment un premier réseau radio de faible portée (120) ;
c) stockage temporaire, dans chaque premier terminal mobile (20, 30, 40, 50) du premier réseau radio de faible portée (120), du profil d'utilisateur des autres premiers terminaux mobiles (20, 30, 40, 50) respectifs du premier réseau radio de faible portée (120) ;
d) comparaison, dans au moins un premier terminal mobile (20) du premier réseau radio de faible portée (120), du profil d'utilisateur qui y est mémorisé avec les profils d'utilisateur stockés temporairement ; et
e) en cas de concordance au moins partielle entre le profil d'utilisateur mémorisé et au moins un profil d'utilisateur stocké temporairement, délivrance d'un message d'information au premier terminal mobile (20) où est mémorisé le profil d'utilisateur à comparer, et/ou au premier terminal mobile ou aux premiers autres terminaux mobiles (30) où a été mémorisé le profil d'utilisateur concordant au moins partiellement avec le profil d'utilisateur mémorisé,
**caractérisé en ce que**
au moins un premier terminal mobile (20) du premier réseau radio de faible portée (120) établit une liaison de communication par l'intermédiaire d'un réseau radio séparé (70), en particulier un WLAN ou un réseau de téléphonie mobile public, avec un deuxième réseau radio de faible portée (130) formé par plusieurs deuxièmes terminaux mobiles (90, 100, 110), un profil d'utilisateur étant mémorisé dans chaque deuxième terminal mobile (90, 100, 110) et les profils d'utilisateur des autres deuxièmes terminaux mobiles étant stockés temporairement, et **en ce que** le profil d'utilisateur mémorisé dans le premier terminal mobile (20) et/ou les profils d'utilisateur qui y sont stockés temporairement sont transmis à au moins un des deuxièmes terminaux mobiles (90, 100, 110) via la liaison de communication établie.

3. Procédé selon la revendication 2, **caractérisé en ce que** le profil d'utilisateur mémorisé dans un deuxième terminal mobile (90) et/ou les profils d'utilisateur des autres deuxièmes terminaux mobiles qui y sont stockés temporairement sont transmis au premier terminal mobile (20) via la liaison de communication établie.

4. Procédé selon l'une des revendications 1 à 3, **caractérisé en ce que**
dans au moins un deuxième terminal mobile (90), le profil d'utilisateur mémorisé est comparé aux profils d'utilisateur stockés temporairement qui contiennent les profils d'utilisateur des premiers terminaux mobiles (20, 30, 40, 50), et **en ce qu'**en cas de concordance au moins partielle entre le profil d'utilisateur mémorisé et au moins un profil d'utilisateur stocké temporairement, un message d'information est émis pour le ou les deuxièmes terminaux mobiles (90) et/ou pour le premier terminal mobile (20) où a été mémorisé le profil d'utilisateur au moins partiellement concordant.

5. Procédé selon l'une des revendications 1 à 4, **caractérisé**
**en ce que**, dans le ou les premiers terminaux mobiles (20), le profil d'utilisateur mémorisé est comparé aux profils d'utilisateur stockés temporairement qui contiennent les profils d'utilisateur des deuxièmes terminaux mobiles (90, 100, 110), et en ce qu'en cas de concordance au moins partielle entre le profil d'utilisateur mémorisé et au moins un profil d'utilisateur stocké temporairement, un message d'information est émis pour le ou les premiers terminaux mobiles (20) et/ou pour le deuxième terminal mobile (90) où a été mémorisé le profil d'utilisateur au moins partiellement concordant.

6. Procédé selon l'une des revendications précédentes, **caractérisé**
**en ce que** le premier et/ou le deuxième réseau radio de faible portée (120, 130) forme un réseau ad hoc, en particulier conforme au standard Bluetooth.
